# EUROPEAN PATENT SPECIFICATION

(11) **EP 3 356 872 B1**
(45) Date of publication and mention of the grant of the patent: **23.06.2021**
(21) Application number: 15770887.6
(22) Date of filing: 28.09.2015
(51) Int. Cl.: G02B 6/44

(54) **OPTICAL TERMINATION BOX**
OPTISCHE ANSCHLUSSDOSE
BOÎTIER DE TERMINAISON OPTIQUE

(43) Date of publication of application: 08.08.2018
(73) Proprietor: Prysmian S.p.A., 20126 Milan (IT)
(72) Inventor: ABBIATI, Fabio, 20126 Milano (IT)
(74) Representative: Porta & Consulenti Associati S.p.A.
(86) International application number: PCT/EP2015/072259
(87) International publication number: WO 2017/054837

(56) References cited:
- EP-A1- 2 639 613
- US-A1- 2011 222 829
- US-A1- 2014 023 334
- None

## Description

The present invention relates to an optical termination box to be used in optical access networks, preferably in a FTTH (Fiber to the Home) network.

A FTTH network is an optical access network providing a number of end customers with broadband communication services from operators, i.e. with services requiring data transmission at a very high rate, for example of some Mbit/s.

A FTTH network comprises a central office which is connected with one or more optical distribution boxes which are typically located in the basement of the building where the end customers reside.

The connection between the central office and the optical distribution box is performed with a cable, commonly known as network cable. From the optical distribution box, each end customer can be directly reached by another optical cable, hereinafter referred to as "drop cable".

Optionally, when the optical distribution box is located in a building having multi dwelling units, for example arranged in a plurality of floors, intermediate optical modules are installed at each floor for receiving an optical cable, hereinafter referred to as "riser cable", which exits the optical distribution box and runs vertically through the building from the basement up to all the building floors. Typically, the riser cable may contain up to 96 optical fibers. The connection between the intermediate optical modules and each customer's apartment is then performed with the drop cable.

For optically cabling a building, an optical connection has to be performed within the optical distribution box between the network cable entering the optical distribution box and the drop cable or riser cable exiting the optical distribution box.

In order to allow quick and easy connection, without the need of qualified operators, pre-connectorized optical fibers are used within the optical distribution box for connecting the network cable to the drop cable or, in case of multi dwelling units, for connecting the network cable to the riser cable in the distribution box and the riser cable to the drop cable in the intermediate optical module.

Throughout this description and in the following claims, the expression "pre-connectorized optical fiber" is used to indicate an optical fiber having, at at least one end thereof, a factory or field-mount assembled and tested optical connector, wherein the expression "optical fiber" is used to indicate an elongated optical element comprising an optical waveguide, constituted by an optically transmissive core, surrounded by a cladding. The optical waveguide is preferably covered by at least one protective coating layer. Two protective coating layers are preferably provided: a first coating layer (primary coating) is in direct contact with the optical waveguide, while a second coating layer (secondary coating) covers the primary coating. In addition, a buffer layer may cover the optical fiber. The buffer layer may be substantially in contact with the secondary coating (tight buffer) or it may consist of a small tube housing one or more optical fibers (loose buffer).

Typically, an optical distribution box comprises:
a) a splice area wherein optical fibers of the network cable are spliced to respective first pre-connectorized optical fibers,
b) a first connection area wherein the first pre-connectorized optical fibers are connected to respective second pre-connectorized optical fibers,
c) a splitter area wherein the second pre-connectorized optical fibers are each splitted into a plurality of third pre-connectorized optical fibers, and
d) a second connection area wherein the third pre-connectorized optical fibers are connected to respective optical fibers exiting the optical distribution box to reach the building floors or directly the customer's apartments.

Storage areas are provided between all the abovementioned areas as well as upstream the splice area and downstream the second connection area to park extra-length portions of the optical fibers which are actually used, so as to avoid for example that an installer error oblige the installer to deploy another entire new cable, as well as to park optical fibers which are not used.

The first connection area allows access of the operator's technicians to the network for testing the network on the side thereof toward the central unit or for allowing connection to the network of an optical cable of another operator.

The second connection area allows access of the operator's technicians to the network for testing the network on the side thereof toward the customers.

WO 2011/076275 discloses an optical termination box comprising a base, a splice tray rotatably attached to the base and a cover. The base comprise a portion configured to house the end portion of a drop cable entering the optical termination box and a plurality of connector supporting frames configured to house four optical connectors so that the optical fibers of the drop cable may be accessed from the exterior of the optical termination box. Each optical cable of the drop cable may be connected to a respective pre-connectorized optical fiber by means of a respective optical fiber splice. A parking area of extra-length portions of the optical fibers of the drop cable is provided on the top surface of the splice tray.

Examples of optical terminal boxes are also disclosed in US 2014/023334 A1, EP 2 639 613 A1 and US 2011/222829 A1.

The Applicant observed that in old buildings (or in brownfield sites), no specific space is dedicated in the building basement for accommodating optical distribution boxes and the space available is usually small. Thus, for optically cabling such buildings, there is the need to have compact optical distribution boxes which can be located in narrow spaces left available in the building basement.

The Applicant also observed that the abovementioned need of compactness should not prevent providing a suitable space within the optical termination box for accommodating all of the abovementioned areas as well as providing an easy access of the operator's technicians to each of these areas.

The Applicant further observed that the abovementioned need of compactness should not cause the optical fibers housed within the optical distribution box to be bent with a radius smaller than a minimum bending radius, in order not to compromise the transmission capability of the optical fibers.

The Applicant noted that in order to meet all the abovementioned needs it is usually required an optical distribution box having an overall size larger than the space available in the building basement.

According to the Applicant, the task of reducing the overall size of the optical distribution box is hampered, inter alias, by the need to provide a fiber storage area in the optical distribution box both upstream and downstream the connection areas.

The Applicant found that a considerable reduction of the overall size on the floor can be suitable achieved, still meeting all the other needs discussed above, by providing an optical distribution box wherein the connection area and the storage area to be provided upstream and downstream the connection area are defined on different, overlapped surfaces.

Accordingly, the present invention relates to an optical termination box, comprising the features recited in claim 1.

The optical termination box of the invention can be advantageously used as an optical distribution box to be accommodated in building basements, even in those buildings where the space available on the floor for accommodating the optical distribution box is very small, as in old buildings or brownfield sites. The provision of the connection area in a separate and overlapped surface with respect to the surface where the storage areas upstream and downstream the connection area are provided indeed allows a considerable reduction of the size on the floor of the optical termination box to be achieved.

The connection area and the storage area are defined on opposite surfaces of a panel hinged to the base body. This provision allows reducing the height of the optical termination box as well.

The width of the panel is substantially equal to the width of the connection area. No extra space other than the one dedicated to the connection area is thus provided on the panel in the transversal direction thereof, so that the width of the panel is kept as small as possible, thus actually reducing the size on the floor of the optical termination box.

Throughout this description and in the following claims, the term "length" is used to refer to the longitudinal direction along which the mutual connection of two optical fibers in each adapter of the connection area occurs, while the term "width" is used to refer to a transversal direction perpendicular to the abovementioned longitudinal direction. The longitudinal direction corresponds to the greater dimension on the box, while the transversal direction corresponds to the smaller direction on the box.

Preferably, the input and output pre-connectorized optical fibers comprise at their ends respective optical connectors connected through said adapters.

Preferably, the length of the panel is substantially equal to the sum of the length of the adapters, about twice the length of said optical connectors and about twice a predetermined minimum bending radius of the input and output pre-connectorized optical fibers. The length of the panel is thus the minimum length required to accommodate the adapters and the connectors to be housed in said adapters and to avoid bending of the optical fibers with a radius smaller than the minimum bending radius, thus actually reducing the size on the floor of the optical termination box.

In preferred embodiments, the panel is rotatable between a first operative position in which the panel is overlapped to the bottom tray and a second operative position in which the panel is not overlapped to the bottom tray.

In the following of this description, the "first operative position" of the panel is also referred to as the "closed position" of the panel and the "second operative position" of the panel is also referred to as the "open position" of the panel.

Preferably, when the panel is in the first operative position the connection area is located on a top surface of the panel and the storage area is located on a back surface of the panel.

Preferably, the length of the panel is substantially equal to the length of the bottom tray and corresponds to the length of the optical termination box.

Preferably, the bottom tray comprises a first passageway configured to allow entering of said optical cable in the optical termination box, wherein when the panel is in said first operative position the panel is overlapped to said first passageway. This provision also contributes to reduce the size on the floor of the optical termination box.

Preferably, the bottom tray comprises a channel configured to guide the input pre-connectorized optical fibers toward the connection area, wherein when the panel is in said first operative position the panel is not overlapped to said channel.

Preferably, the width of the bottom tray corresponds to the width of the optical termination box and is slightly larger than the width of the panel just to allow the pre-connectorized optical fibers to be initially guided toward the connection area by the abovementioned channel.

Preferably, the bottom tray comprises a second passageway configured to allow the output pre-connectorized optical fibers to exit the optical termination box, wherein when the panel is in said first operative position the panel is overlapped to said second passageway. This provision also contributes to reduce the size on the floor of the optical termination box.

In preferred embodiments, said bottom tray comprises a second storage area for parking extra-length portions of the output pre-connectorized optical fibers.

Preferably, the first storage area comprises a first parking zone for parking said extra-length portions of the input pre-connectorized optical fibers and a second parking zone for parking said extra-length portions of the output pre-connectorized optical fibers.

More preferably, the first parking zone is separate from the second parking zone.

In preferred embodiments, the base body further comprises a second connection area comprising second connector supporting frames configured to house further adapters for connecting the input pre-connectorized optical fibers to further pre-connectorized optical fibers spliced to respective optical fibers of said optical cable entering into the optical termination box. This connection area allows access of the operator's technicians to the network for testing the network on the side thereof toward the central unit or for allowing connection to the network of an optical cable of another operator.

Preferably, the second connection area is defined on a second panel hinged to said base body.

More preferably, the second panel is hinged to the bottom tray and rotatable between a first position in which the second panel is overlapped to the bottom tray and a second position in which the second panel is not overlapped to the bottom tray.

In the following of this description, the "first operative position" of the second panel is also referred to as the "closed position" of the second panel and the "second operative position" of the second panel is also referred to as the "open position" of the second panel.

Preferably, when the second panel is in the first operative position thereof the second connection area is located on a back surface of the second panel.

Preferably, when both the first panel and the second panel are in the first position, the second panel is overlapped to the first panel, so as not to increase the size on the floor of the optical termination box.

In preferred embodiments, the panel is hinged to a first side portion of the bottom tray and the second panel is hinged to a second side portion of the bottom tray opposed to the first side portion, so that when both the panel and the second panel are in the second position, the panel and the second panel extend from opposite sides of the bottom tray.

In preferred embodiments, the base body further comprises a plurality of seats for housing joints which connect the optical fibers of said optical cable entering into the optical termination box to the further pre-connectorized optical fibers.

Preferably, said plurality of seats are arranged on the second panel, so as not to increase the height of the optical termination box.

More preferably, said plurality of seats are arranged on a top surface of the second panel when the second panel is at the first operative thereof. This make easier the jointing operation performed on site by the operator's technicians.

In preferred embodiments, the base body further comprises a third storage area for parking extra-length portions of said input pre-connectorized optical fibers.

More preferably, said third storage area is defined on the second panel, so as not to further increase the height of the optical termination box.

Even more preferably, the second connection area and the third storage area are both defined on a first surface of the second panel.

In preferred embodiments, the base body further comprises a fourth storage area for parking portions of optical fibers of the optical cable.

Preferably, the fourth storage area is defined on the second panel, so as not to further increase the height of the optical termination box.

More preferably, the fourth storage area is defined on a second surface of the second panel opposed to said first surface.

Even more preferably, when the second panel is in the first operative position thereof the fourth storage area is located on a top surface of the second panel.

The abovementioned seats for housing the joints and the fourth storage area are thus preferably provided on the same surface of the second panel.

Further features and advantages of the present invention will appear more clearly from the following detailed description of preferred embodiments thereof, such description being provided merely by way of non-limiting example and being made with reference to the annexed drawings. In such drawings:
- figure 1 is a perspective view of an embodiment of the optical terminal box of the present invention;
- figure 2 is a perspective view of a base body of the optical terminal box of figure 1, in a first operative configuration thereof;
- figure 3 is a perspective view of the base body of figure 2, in a second operative configuration thereof;
- figure 4 is a perspective view of the base body of figure 2, in a third operative configuration thereof;
- figure 5 is a top view of a first panel of the base body of figure 2,
- figure 6 is a back view of the first panel of figure 5, showing only some of the features of this panel;
- figure 7 is a side view of the first panel of figure 5.

In the drawings, numeral reference 1 indicates a preferred embodiments of an optical termination box according to the present invention.

Preferably, the optical termination box 1 is used as an optical distribution box in FTTH network.

More preferably, the optical termination box 1 is intended to be arranged in the basement of a building to provide optical access to the customers residing in that building.

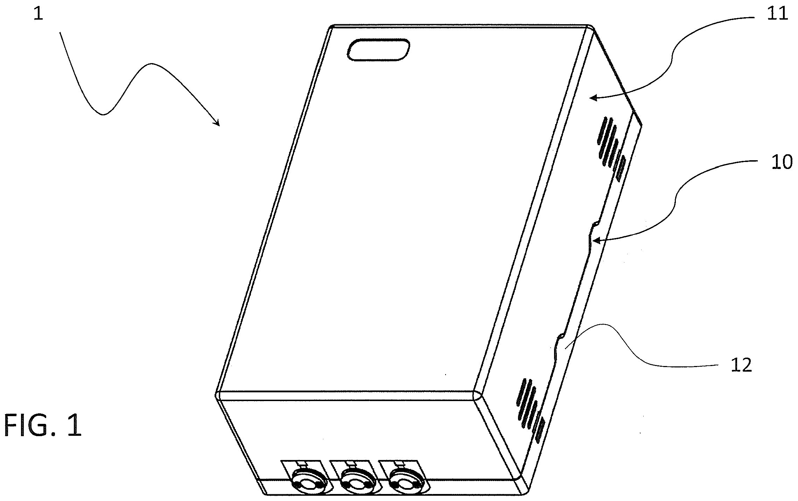

As shown in figure 1, the optical termination box 1 has a substantially parallelepiped shape.

For example, the size of the optical termination box 1, suitable to house up to eight adapters in a single panel (as explained in detail in the following description), can be 150x90x50 mm (length x width x height) so that it can be used in those buildings where there is no space originally dedicated to house an optical termination/distribution box and, accordingly, the space available is small.

Referring to figure 1, the optical termination box 1 comprises a base body 10 and a cover 11 configured to be removably attached to the base body 10. Both the base body 10 and the cover 11 have a substantially rectangular shape.

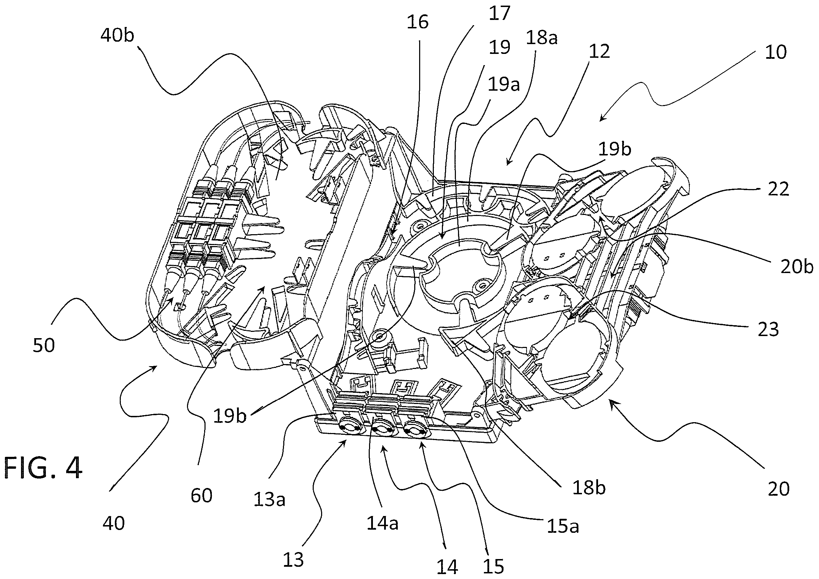

As shown in figures 4, the base body 10 comprises a bottom tray 12, a first panel 20 hinged to the bottom tray 12 at a first side portion thereof and a second panel 40 hinged to the bottom tray 12 at a second side thereof opposed to the first side. Preferably, the bottom tray 12 is built in the base body 10 itself.

As shown in figure 1, the size on the floor of the optical termination box 1 is equal to the size on the floor of the bottom tray 12.

Both the first panel 20 and the second panel 40 have a substantially rectangular shape with rounded corners.

The length of the panels 20 and 40 is substantially equal to the length of the bottom tray 12.

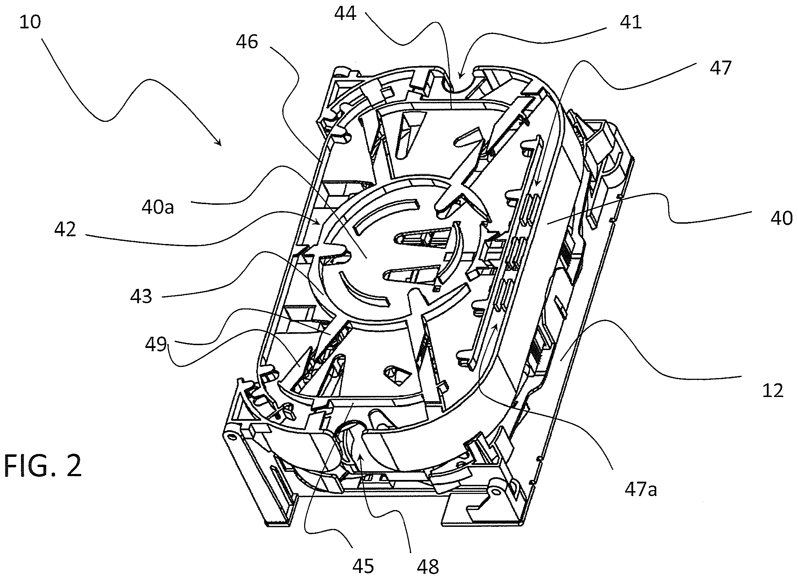

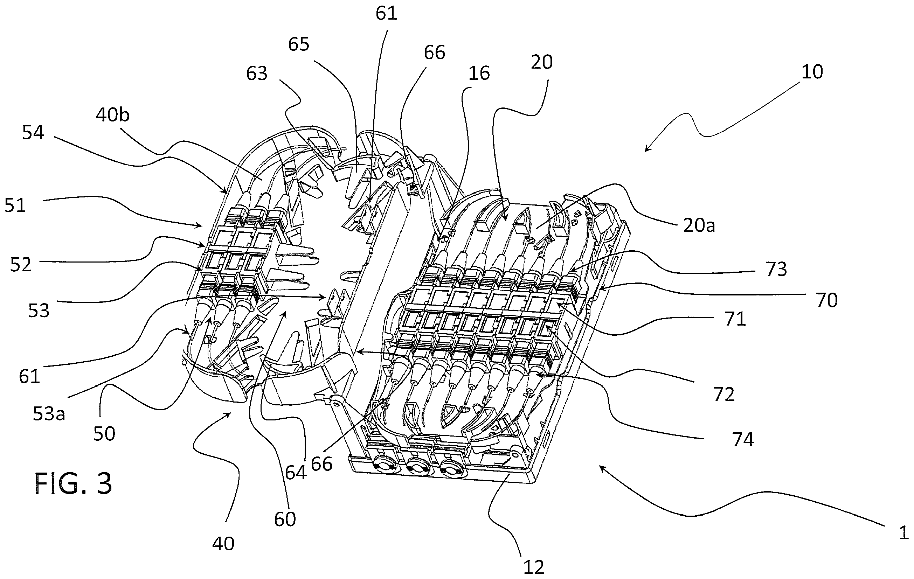

As shown in figures 2 and 3, the width of panel 20 is slightly smaller than the width of the bottom tray 12, whereas the width of panel 40 is substantially equal to the width of the bottom tray 12.

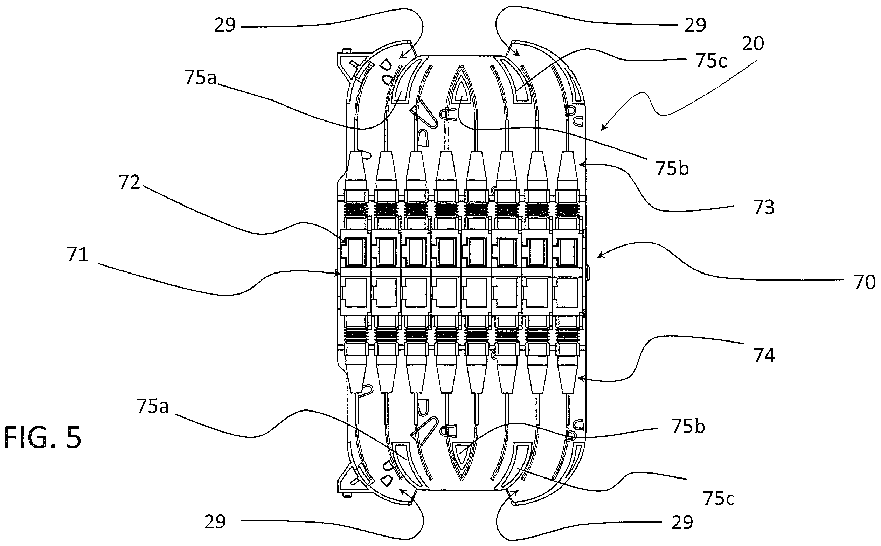

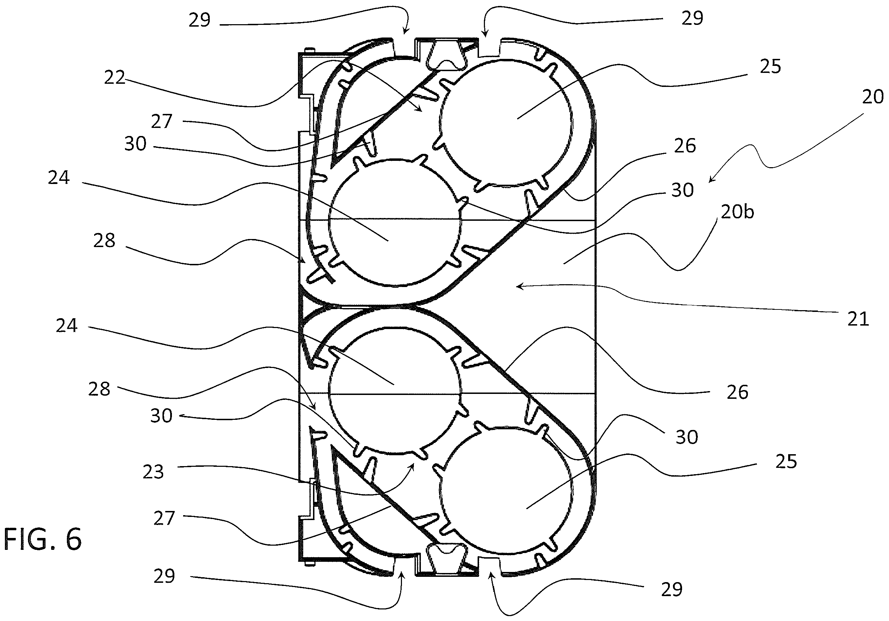

Panel 20 comprises opposed surfaces 20a (figures 3 and 5) and 20b (figures 4 and 6). Analogously, panel 40 comprises opposed surfaces 40a (figure 2) and 40b (figures 3 and 4).

When panels 20 and 40 are in the closed position thereof, surfaces 20a and 40a correspond to the top surface of panels 20 and 40 11, respectively, and face the cover, while surfaces 20b and 40b correspond to the back surface of panels 20 and 40, respectively, and face the bottom tray 12.

In the embodiment shown in the attached drawings, the first panel 20 and the second panel 40 are hinged at opposite longitudinal sides of the bottom tray 12, that is at sides extending along the length of the bottom tray 12 (figures 3 and 4).

In different embodiments not shown, the first panel 20 or the second panel 40 or both of them can be hinged at transversal sides of the bottom tray 12, that is at sides extending along the width of the bottom tray 12.

Both the first panel 20 and the second panel 40 can be rotated with respect to the bottom tray 12 between a respective first operative position (closed position) in which they are overlapped to the bottom tray 12 and a second operative position (open position) in which they are not overlapped to the bottom tray 12 and extend from opposite sides of the bottom tray 12.

When the first panel 20 and the second panel 40 are both in the closed position, the second panel 40 overlaps the first panel 20 (figure 2). In a different embodiment not shown, when the first panel 20 and the second panel 40 are both in the closed position, the first panel 20 overlaps the second panel 40.

As shown in figure 4, the bottom tray 12 comprises, at a side thereof orthogonal to the sides where the panels 20 and 40 are hinged, a passageway 13 configured to allow entering of an optical cable (not shown) in the optical termination box 1. Preferably, the abovementioned optical cable is a network cable coming from a central unit of the operator.

In a position adjacent to the passageway 13, along the longitudinal direction of the bottom tray 12, a locking member 13a configured to hold in position the optical cable inside the optical termination box 1 is provided on the bottom tray 12.

The optical cable entering the optical termination box 1 preferably comprises a plurality of optical fibers, possibly arranged inside one or more buffer tubes, an outer sheath and, optionally, one or more strength members.

The bottom tray 12 further comprises, at a side of the passageway 13 along the transversal direction, at least one passageway 14, 15 configured to allow pre-connectorized optical fibers (not shown) optically connected to the optical cable to exit the optical termination box 1 to reach the customers.

Two adjacent passageways 14, 15 are provided in the embodiment shown in the attached drawings, both on the same side with respect to the passageway 13.

In a position adjacent to each of passageways 14, 15, along the longitudinal direction of the bottom tray 12, a respective locking member 14a, 15a configured to hold in position the optical fibers exiting the optical termination box 1 is provided on the bottom tray 12.

One of the passageways 14, 15 can be used for entering into the optical termination box 1 a network optical cable of a different operator, instead of for exiting from the optical termination box 1 the optical fibers directed to the customers.

Passageways 13, 14, 15 are located on the bottom tray 12 in respective positions so that when panels 20, 40 are in the closed position panels 20, 40 are overlapped to passageways 13, 14, 15.

The bottom tray 12 also comprises a channel 16 and a guiding element 17 for guiding transitions of the optical fibers inside the optical termination box 1 from the second panel 40 to the first panel 20 through the bottom tray 12.

The channel 16 extends on the bottom tray 12 along a direction parallel to the longitudinal direction of the bottom tray 12 at a side portion of the bottom tray 12 close to the portion where the second panel 40 is hinged.

The guiding element 17 is arranged on the side of the bottom tray 12 opposed to the side where passageways 13, 14, 15 are provided.

The bottom tray 12 further comprises a storage area 19 for parking extra-length portions of the optical fibers exiting the optical termination box 1 through passageways 14, 15.

The storage area 19 comprises a mandrel 19a and, on the opposite sides with respect to the mandrel 19a, guiding elements 18a, 18b configured to cooperate with the mandrels 19a to collect the abovementioned extra-length portions of optical fibers in the storage area 19.

Guiding elements 18a, 18b also allow transitions of the optical fibers from the first panel 20 to the passageways 14, 15.

The guiding elements 17, 18a, 18b and the mandrel 19a are defined by curved walls having a radius of curvature at least greater than or equal to the minimum bending radius of the optical fibers. The value of the minimum bending radius depends on the type of the optical fibers. Typically, it is comprised between about 20 mm to about 30 mm.

Fiber retaining elements 19b projects cantilevered from the top surface of the curved walls of the guiding elements 17, 18a, 18b and the mandrel 19a to retain the optical fibers in position on the bottom tray 12.

When the first panel 20 is in the closed position (figure 3), it overlaps the whole top surface of the bottom tray 12 except the channel 16. Therefore, the width of the bottom tray 12 (corresponding to the width of the optical termination box 1) is substantially equal to the width of the first panel 20 plus the width of the channel 16.

Referring to figure 2, panel 40 comprises a passageway 41 configured to allow transition of the optical fibers from the bottom tray 12 to the surface 40a of panel 40.

The channel 16 provided on the bottom tray 12 can be used for guiding transition of the abovementioned optical fibers from the bottom tray 13 toward the passageway 41.

A storage area 42 is provided on the surface 40a of panel 40 for parking extra-length portions of the optical fibers coming from the bottom tray 12 and/or portions of optical fibers not to used.

The storage area 42 comprises a fiber winding element 43 configured to collect the abovementioned portions of optical fibers.

Guiding elements 44 and 45 are arranged on the surface 40a of panel 40 on opposite sides with respect to the fiber winding element 43. Guiding elements 44, 45 are configured to cooperate with fiber winding element 43 to collect the optical fibers in the storage area 42.

A further guiding element 46 is provided on the surface 40a of panel 40 at a side portion thereof to guide the transition of the optical fibers on the surface 40a.

A splicing area 47 is provided on the surface 40a of panel 40 in a position adjacent to the storage area 42. In the splicing area 47, at least some of the optical fibers collected around the fiber winding element 43 are spliced to pre-connectorized optical fibers which are optically connected (as better explained below) to the optical fibers exiting the optical termination box 1 and directed to the customers.

A plurality of seats 47a are provided in the splicing area 47 to house the joints between the optical fibers of the optical cable and the abovementioned pre-connectorized optical fibers.

A passageway 48 is provided on panel 40 on the opposite side to passageway 41 to allow transition of the pre-connectorized optical fibers from the splicing area 47 to the surface 40b of panel 40.

The optical fibers leaving the splicing area 47 can be guided toward the passageway 48 by the guiding element 46. These optical fibers can contact the guiding element 46 on the surface thereof opposed the surface faced toward the storage area 42.

The guiding elements 44, 45, 46 and the fiber winding element 43 are defined by curved walls having a radius of curvature at least greater than or equal to the minimum bending radius of the optical fibers.

Fiber retaining elements 49 project cantilevered from the top surface of the curved walls of the guiding elements 44, 45, 46 and the fiber winding element 43 to retain the optical fibers in position on the surface 40a of the panel 40.

The role of passageways 41 and 48 can be inverted with respect to the one discussed above, that is passageway 48 can be used for allowing transition of the optical fibers from bottom tray 12 to the surface 40a of panel 40 and passageway 41 can be used for allowing transition of the optical fibers from surface 40a to surface 40b of panel 40.

As shown in figures 3 and 4, panel 40 comprises, on the back surface 40b thereof, a connection area 50 and, adjacent to the connection area 50, a storage area 60.

Referring to figure 3, the connection area 50 comprises a plurality of connector supporting frames 51 configured to house a plurality of adapters 52 for connecting optical connectors 53 of the pre-connectorized optical fibers coming from the top surface 40a of panel 40 to optical connectors 54 of a plurality of pre-connectorized optical fibers to be directed toward the bottom tray 12. Only a portion of each of the abovementioned pre-connectorized optical fibers is shown in figures 3.

In the embodiment shown in the attached drawings, three connectors can be housed in the adapters 52 associated with the connector supporting frames 51. More connectors can be provided according to the number of optical connectors of the pre-connectorized optical fibers coming from the top surface 40a of panel 40.

Each of the optical fibers having connectors 54 is splitted, through a respective splitter (not shown), into a plurality of pre-connectorized optical fibers before leaving the panel 40 and reaching the bottom tray 12. The splitters are arranged on the storage area 60.

According to an embodiment not shown in the drawings, preferably, an optical fiber having connectors 54 can reach the bottom tray 12 directly and exit from the latter for reaching a different operator.

The storage area 60 comprises a couples of supporting elements 61 configured to guide the optical fibers coming from the connection area 50 into the storage area 60.

The storage area 60 can comprise, at a side of the connection area 50, a fiber winding element or mandrel (not shown) configured to collect the abovementioned optical fibers and respective splitters.

Guiding elements 63 and 64 are arranged on the storage area 60 to cooperate with fiber winding element, if present, to collect the optical fibers in the storage area 60.

The guiding elements 63, 64 and the fiber winding element, if present, are defined by curved walls having a radius of curvature at least greater than or equal to the minimum bending radius of the optical fibers.

Fiber retaining elements 65 projects cantilevered from the top surface of the curved walls of the guiding elements 63, 64 and of the fiber winding element, if present, to retain the optical fibers in position on the surface 40b of panel 40.

Two passageways 66 are provided on the surface 40b of panel 40 at the side thereof where panel 40 is hinged to the bottom tray 12. Each of the passageways 66 can be used to allow transition of the optical fibers from the storage area 60 to the channel 16 provided on the bottom tray 12.

The optical fibers reaching the bottom tray 12 from the storage area 60 of panel 40 are guided, through the guiding element 17, toward surface 20b of panel 20 (figure 4).

As shown in figure 6, panel 20 comprises, on the surface 20b thereof, a fiber storage area 21. Figure 6 shows only some of the features of the surface 20b shown in figure 4.

Preferably, fiber storage area 21 comprises two parking zones 22, 23, which are identical to each other, so that the same numeral references are used in each of the two parking zones 22, 23.

The parking zones 22, 23 are separate from each other, with no crossing points, so that the optical fibers collected in the parking zone 22 can be deployed independently and at different times from the optical fibers collected in the parking zone 23 and viceversa.

Referring to figure 6, each of the two parking zones 22, 23 comprises two mandrels 24, 25, a guiding element 26 extended on one side with respect to the mandrels 24, 25 and an additional guiding element 27 extending on the other side with respect to the mandrels 24, 25. The guiding elements 26, 27 of each of the parking zone 22, 23 are configured to cooperate with mandrels 24, 25 of the same parking zone 22, 23 to collect the optical fibers in the respective parking zone 22, 23.

Preferably, the position of the mandrels 24, 25 and of the guiding elements 26, 27 in each of the parking zones 22, 23 is such as to allow a 8-shaped winding of the optical fibers in each of the parking zones 22, 23. Preferably, the winding of the optical fibers in the parking zone 22 has an opposed direction (for example, clockwise) to the winding of the optical fibers in the parking zone (for example, anticlockwise).

Each parking zone 22, 23 further comprises a passageway 28 for allowing transition of the optical fibers from the bottom tray 12 to the surface 20b of panel 20.

Each parking zone 22, 23 also comprises at least one passageway 29 for allowing transition of the optical fibers between the surface 40b and the surface 40a of panel 40 (see also figure 5). In the embodiment shown in the attached drawings, two passageways 29 are provided in each parking zone 22, 23.

The parking zone 22 is configured to receive and park the optical fibers coming from the bottom tray 12, entering the parking zone 22 through the respective passageway 28 and exiting the parking zone 22 through one of the respective passageways 29 to reach the surface 40a of panel 40.

The parking zone 23 is configured to receive and park the optical fibers coming from the surface 40a of panel 40, entering the parking zone 23 through one of the respective passageway 29 and exiting the parking zone 23 through the respective passageway 28 to reach the the parking zone 19 provided on the bottom tray 12.

The role of parking zones 22, 23 can be inverted with respect to the one discussed above, that is parking zone 23 can receive and park the optical fibers coming from the bottom tray 12, entering the parking zone 23 through the respective passageway 28 and exiting the parking zone 23 through one of the respective passageways 29 to reach the surface 40a of panel 40, whereas parking zone 22 can receive and park the optical fibers coming from the surface 40a of panel 40, entering the parking zone 22 through one of the respective passageway 29 and exiting the parking zone 22 through the respective passageway 28 to reach the parking zone 19 provided on the bottom tray 12. The guiding elements 26, 27 and the mandrels 24, 25 are defined by curved walls having a radius of curvature at least greater than or equal to the minimum bending radius of the optical fibers.

As shown in figure 6, fiber retaining elements 30 projects cantilevered from the top surface of the curved walls of the guiding elements 26, 27 and the mandrels 24, 25 to retain the optical fibers in position on the surface 20b of panel 20.

As shown in figures 3 and 5, panel 20 comprises, on the top surface 20a thereof, a connection area 70 comprising a plurality of connector supporting frames 71 configured to house a plurality of adapters 72 for connecting optical connectors 73 of the pre-connectorized optical fibers coming from one of the parking zones 22, 23 provided on the back surface 20b of panel 20 to optical connectors 74 of a plurality of pre-connectorized optical fibers directed to the other of the parking zones 22, 23 provided on the back surface 20b of panel 20 to then reach the bottom tray 12.

In the embodiment shown in the attached drawings, eight connectors can be housed in the adapters 72 associated with the connector supporting frames 71.

An optical termination box 1 as discussed in this description with 12 adapters 72 is provided as well.

Referring to figure 5, a plurality of partition elements (three partition elements 75a, 75b, 75c in the embodiment shown in the attached drawings) are provided on the surface 20a of panel 20 close to each of the opposed passageway 29 to properly guide different optical fibers or groups of optical fibers from passageway 29 to adapters 72 and from adapters 72 to the opposed passageway 29.

The width of the panel 20 is substantially equal to the width of the connection area 70, that is substantially equal to the sum of the widths of each adapter 72 and of each connector supporting frame 71.

The length of the panel 20 is substantially equal to the sum of the length of the adapters 72, about twice the length of the connectors 73, 74 (that is the length of the connectors 73 plus the length of the connectors 74) and about twice a minimum bending radius of the pre-connectorized optical fibers connected to the adapters 72.

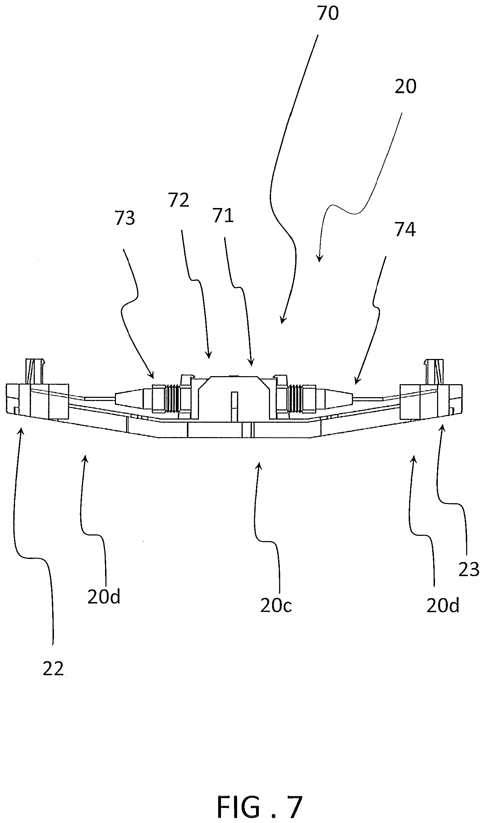

As shown in figure 7, panel 20 has a thinner central portion 20c and thicker opposed portions 20d. The connection area 70 is provided at the central portion 20c, whereas the parking zones 22, 23 are provided at the opposed portions 20d. This arrangement allows to reduce the height of the panel 20.

In accordance with the above description, a possible path of the optical fibers inside the optical termination box 1 is described below.

Referring initially to figure 4, the optical fibers of the optical cable entering the optical termination box 1 through passageway 13 are directed to the surface 40a of the panel 40, which is in the open position thereof, possibly passing through the channel 16 provided on the bottom tray 12. These optical fibers reach the surface 40a passing through the passageway 48 (figure 2).

A portion of the abovementioned optical fibers or the optical fibers which are not used are parked in the storage area 42. The optical fibers which are used reach the splicing area 47, where each of them is spliced to a respective pre-connectorized optical fiber (figure 2).

Each optical fiber so spliced passes through the passageway 48 and reaches the surface 40b of the panel 40. Here each optical fiber is connected, through a respective adapter 52 provided in the connection area 50, to a respective pre-connectorized optical fiber which is parked in the storage area 60 (figure 3).

Each pre-connectorized optical fiber is splitted in the storage area 60 into a plurality of pre-connectorized optical fibers, each of them passing through the passageway 66 and the channel 16 to reach the guiding element 17 provided om bottom tray 12. The guiding element 17 guides the optical fibers toward the panel 20 (figure 4).

The optical fibers enter into the parking zone 22 on the surface 20b of panel 20 passing through the passageway 28 provided in the parking zone 22 and is wound around one or both the mandrels 24, 25 to then reach the surface 20a of panel 20 passing through the passageway 29 provided on one side of the parking zone 22 (figure 6).

On the surface 20a of panel 20 the optical fibers are connected, through the adapters 72 provided in the connection area 70, to respective pre-connectorized optical fibers (figure 5).

Each of these pre-connectorized optical fibers passes through passageway 29 provided on the opposite side of panel 20 and reaches the parking zone 23 on the surface 20b of panel 20. Here the optical fibers are wound around one or both the mandrels 24, 25 (figure 6).

The optical fibers then leave the parking zone 23 passing through the respective passageway 28 and reach the storage area 19 provided on the bottom tray 12 (figure 4).

The optical fibers are wound around the mandrel 19a and guided toward the passageway 14, 15 to reach the floors of the building or directly the customer's apartment.

Of course, many different paths can be defined in the optical termination box 1 to optically connect the optical cable 1 entering the optical termination box through passageway 13 to the optical fibers exiting the optical termination box through passageway 14, 15.

## Claims

1. An optical termination box (1), comprising a base body (10) and a cover (11) removably attached to the base body (10), wherein the base body (10) comprises:
- a bottom tray (12);
- a connection area (70) comprising connector supporting frames (71) configured to house adapters (72) for connecting input pre-connectorized optical fibers of an optical cable entering into the optical termination box (1) to output pre-connectorized optical fibers exiting from the optical termination box (1);
- a storage area (21) for parking extra-length portions of the input pre-connectorized optical fibers and extra-length portions of the output pre-connectorized optical fibers;
- wherein the connection area (70) and the storage area (21) are defined on separate, overlapped opposite surfaces (20a, 20b) of a first panel (20) hinged to the bottom tray (12);
**characterised in that** the width of the first panel (20) is substantially equal to the width of the connection area (70), wherein the width of the connection area (70) is substantially equal to the sum of the widths of each adapter (72) and of each connector supporting frame (71).

2. The optical termination box (1) according to claim 1, wherein the base body (10) further comprises a second connection area (50) comprising connector supporting frames (51) configured to house further adapters (52) for connecting said input pre-connectorized optical fibers to further pre-connectorized optical fibers spliced to respective optical fibers of said optical cable entering into the optical termination box (1).

3. The optical termination box (1) according to claim 2, wherein the second connection area (50) is defined on a second panel (40) hinged to said bottom tray (12).

4. The optical termination box (1) according to any of the previous claims, wherein the first panel (20) is rotatable between a first operative position in which the said first panel (20) is overlapped to the bottom tray (12) and a second operative position in which the first panel (20) is not overlapped to the bottom tray (12).

5. The optical termination box (1) according to claim 4, wherein the bottom tray (12) comprises a first passageway (13) configured to allow entering of said optical cable in the optical termination box, wherein when the first panel (20) is in said first operative position the first panel (20) is overlapped to said first passageway (13).

6. The optical termination box (1) according to claim 4 or 5, wherein the bottom tray (12) comprises a second passageway (14, 15) configured to allow the output pre-connectorized optical fibers to exit the optical termination box (1), wherein when the first panel (20) is in said first operative position the first panel (20) is overlapped to said second passageway (14, 15).

7. The optical termination box (1) according to any of claims 4 to 6, wherein said bottom tray (12) comprises a second storage area (19) for parking extra-length portions of the output pre-connectorized optical fibers.

8. The optical termination box (1) according to any of claims 1 to 7, wherein the first storage area (21) comprises a first parking zone (22) for parking said extra-length portions of the input pre-connectorized optical fibers and a second parking zone (23) for parking said extra-length portions of the output pre-connectorized optical fibers, wherein the first parking zone (22) is separate from the second parking zone (23).

9. The optical termination box (1) according to claim 4, when depending on claim 3 wherein the second panel (40) is rotatable between a first position in which the second panel (40) is overlapped to the bottom tray (12) and a second position in which the second panel (40) is not overlapped to the bottom tray (12), wherein when the second panel (40) is in the first operative position thereof the second connection area (50) is located on a back surface (40b) of the second panel (40).

10. The optical termination box (1) according to claim 9, wherein when both the first panel (20) and the second panel (40) are in the first position, the second panel (40) is overlapped to the first panel (20).

11. The optical termination box (1) according to claim 9 or 10, wherein the first panel (20) is hinged to a first side portion of the bottom tray (12) and the second panel (40) is hinged to a second side portion of the bottom tray (12) opposed to the first side portion, so that when both the first panel (20) and the second panel (40) are in the second position, the first panel (20) and the second panel (40) extend from opposite sides of the bottom tray (12).

12. The optical termination box (1) according to any of claims 1 to 11, wherein the base body (10) further comprises a plurality of seats (47a) for housing joints which connect the optical fibers of said optical cable entering into the optical termination box (1) to the further pre-connectorized optical fibers, wherein said plurality of seats (47a) are arranged on the second panel (40).

13. The optical termination box (1) according to claim 12 when depending from claim 9, wherein said plurality of seats (47a) are arranged on a top surface (40a) of the second panel (40) when the second panel (40) is at the first operative position thereof.

14. The optical termination box (1) according to claim 7, wherein the base body (10) further comprises a third storage area (60) for parking extra-length portions of said input pre-connectorized optical fibers, wherein said third storage area (60) is defined on the second panel (40).

15. The optical termination box (1) according to claim 14, wherein the second connection area (50) and the third storage area (60) are both defined on a first surface (40b) of the second panel (40), and wherein the base body (10) further comprises a fourth storage area (42) for parking portions of optical fibers of the optical cable, wherein the fourth storage area (42) is defined on a second surface (40a) of the second panel (40) opposed to said first surface (40b).

## Patentansprüche

1. Optische Anschlussdose (1), umfassend einen Grundkörper (10) und eine Abdeckung (11), die abnehmbar an dem Grundkörper (10) angebracht ist, wobei der Grundkörper (10) umfasst:
- Eine Bodenwanne (12);
- einen Verbindungsbereich (70), der Verbinderträgerrahmen (71) umfasst, die konfiguriert sind, um Adapter (72) zum Verbinden von vorverbundenen optischen Eingangsfasern eines optischen Kabels, das in die optische Anschlussdose (1) eintritt, mit vorverbundenen optischen Ausgangsfasern, die aus der optischen Anschlussdose (1) austreten, aufzunehmen;
- einen Speicherbereich (21) zum Parken von Überlängenabschnitten der eingangsseitig vorverbundenen optischen Fasern und von Überlängenabschnitten der ausgangsseitig vorverbundenen optischen Fasern;
- wobei der Verbindungsbereich (70) und der Speicherbereich (21) definiert sind durch eine separate, überlappende gegenüberliegende Oberfläche (20a, 20b) einer ersten Platte (20), die an der Bodenwanne (12) angelenkt ist;
**dadurch gekennzeichnet, dass** die Breite der ersten Platte (20) im Wesentlichen gleich der Breite des Verbindungsbereichs (70) ist, wobei die Breite des Verbindungsbereichs (70) im Wesentlichen gleich der Summe der Breiten jedes Adapters (72) und jedes Verbinderträgerrahmens (71) ist.

2. Optische Anschlussdose (1) nach Anspruch 1, wobei der Grundkörper (10) ferner einen zweiten Anschlussbereich (50) umfasst, der Verbinderträgerrahmen (51) umfasst, die so konfiguriert sind, dass sie weitere Adapter (52) aufnehmen, um die vorverbundenen optischen Eingangsfasern mit weiteren vorverbundenen optischen Fasern, die an entsprechende optische Fasern des optischen Kabels, das in die optische Anschlussdose (1) eintritt, gespleißt sind, zu verbinden.

3. Optische Anschlussdose (1) nach Anspruch 2, wobei der zweite Anschlussbereich (50) durch eine zweite Platte (40) definiert ist, die an der unteren Bodenwanne (12) angelenkt ist.

4. Optische Anschlussdose (1) nach einem der vorhergehenden Ansprüche, wobei die erste Platte (20) zwischen einer ersten Betriebsposition, in der die erste Platte (20) mit der Bodenwanne (12) überlappt, und einer zweiten Betriebsposition, in der die erste Platte (20) nicht mit der Bodenwanne (12) überlappt, drehbar ist.

5. Optische Anschlussdose (1) nach Anspruch 4, wobei die Bodenwanne (12) einen ersten Durchgang (13) umfasst, der so konfiguriert ist, dass er das Eintreten des optischen Kabels in die optische Anschlussdose ermöglicht, wobei, wenn sich die erste Platte (20) in der ersten Betriebsposition befindet, die erste Platte (20) mit dem ersten Durchgang (13) überlappt.

6. Optische Anschlussdose (1) nach Anspruch 4 oder 5, wobei die Bodenwanne (12) einen zweiten Durchgang (14, 15) umfasst, der so konfiguriert ist, dass die ausgegebenen vorverbundenen optischen Fasern die optische Anschlussdose (1) verlassen können, wobei, wenn sich die erste Platte (20) in der ersten Betriebsposition befindet, die erste Platte (20) mit dem zweiten Durchgang (14, 15) überlappt.

7. Optische Anschlussdose (1) nach einem der Ansprüche 4 bis 6, wobei die untere Bodenwanne (12) einen zweiten Ablagebereich (19) zum Abstellen von extra langen Abschnitten der ausgegebenen vorverbundenen optischen Fasern umfasst.

8. Optische Anschlussdose (1) nach einem der Ansprüche 1 bis 7, wobei der erste Speicherbereich (21) eine erste Parkzone (22) zum Parken der Überlängenabschnitte der eingangsseitig vorverbundenen optischen Fasern und eine zweite Parkzone (23) zum Parken der Überlängenabschnitte der vorverbundenen optischen Ausgangsfasern aufweist, wobei die erste Parkzone (22) von der zweiten Parkzone (23) getrennt ist.

9. Optische Anschlussdose (1) nach Anspruch 4, wenn dieser von Anspruch 3 abhängt, wobei die zweite Platte (40) zwischen einer ersten Position, in der die zweite Platte (40) mit dem Bodenwanne (12) überlappt, und einer zweiten Position, in der die zweite Platte (40) nicht mit dem Bodenwanne (12) überlappt, drehbar ist, wobei, wenn sich die zweite Platte (40) in ihrer ersten Betriebsposition befindet, der zweite Verbindungsbereich (50) auf einer Rückfläche (40b) der zweiten Platte (40) angeordnet ist.

10. Optische Anschlussdose (1) nach Anspruch 9, wobei, wenn sich sowohl die erste Platte (20) als auch die zweite Platte (40) in der ersten Position befinden, die zweite Platte (40) mit der ersten Platte (20) überlappt.

11. Optische Anschlussdose (1) nach Anspruch 9 oder 10, wobei die erste Platte (20) an einem ersten Seitenabschnitt der Bodenwanne (12) angelenkt ist und die zweite Platte (40) an einem zweiten Seitenabschnitt der Bodenwanne (12) angelenkt ist, der dem ersten Seitenabschnitt gegenüberliegt, so dass, wenn sowohl die erste Platte (20) als auch die zweite Platte (40) in der zweiten Position sind, die erste Platte (20) und die zweite Platte (40) sich von gegenüberliegenden Seiten der Bodenwanne (12) erstrecken.

12. Optische Anschlussdose (1) nach einem der Ansprüche 1 bis 11, wobei der Grundkörper (10) ferner eine Vielzahl von Sitzen (47a) zur Aufnahme von Verbindungen umfasst, die die optischen Fasern des in die optische Anschlussdose (1) eintretenden optischen Kabels mit den weiteren vorverbundenen optischen Fasern verbinden, wobei die Vielzahl von Sitzen (47a) auf der zweiten Platte (40) angeordnet ist.

13. Optische Anschlussdose (1) nach Anspruch 12, wenn dieser von Anspruch 9 abhängt, wobei die mehreren Sitze (47a) auf einer oberen Fläche (40a) der zweiten Platte (40) angeordnet sind, wenn sich die zweite Platte (40) in ihrer ersten Betriebsposition befindet.

14. Optische Anschlussdose (1) nach Anspruch 7, wobei der Grundkörper (10) ferner einen dritten Speicherbereich (60) zum Parken von Überlängenabschnitten der eingegebenen, vorverbundenen optischen Fasern aufweist, wobei der dritte Speicherbereich (60) auf der zweiten Platte (40) definiert ist.

15. Optische Anschlussdose (1) nach Anspruch 14, wobei der zweite Anschlussbereich (50) und der dritte Speicherbereich (60) beide auf einer ersten Oberfläche (40b) der zweiten Platte (40) definiert sind, und wobei der Grundkörper (10) ferner einen vierten Ablagebereich (42) zum Abstellen von Abschnitten optischer Fasern des optischen Kabels aufweist, wobei der vierte Ablagebereich (42) auf einer zweiten Oberfläche (40a) der zweiten Platte (40) gegenüber der ersten Oberfläche (40b) definiert ist.

## Revendications

1. Boîtier de terminaison optique (1), comprenant un corps de base (10) et un couvercle (11) attaché de manière amovible au corps de base (10), dans lequel le corps de base (10) comprend :
- un plateau inférieur (12) ;
- une zone de connexion (70) comprenant des cadres de support de connecteurs (71) configurés pour loger des adaptateurs (72) pour connecter des fibres optiques préconnectorisées d'entrée d'un câble optique entrant dans le boîtier de terminaison optique (1) afin de délivrer en sortie des fibres optiques préconnectorisées sortant du boîtier de terminaison optique (1) ;
- une zone de stockage (21) pour placer des parties de longueur excédentaire des fibres optiques préconnectorisées d'entrée et des parties de longueur excédentaire des fibres optiques préconnectorisées de sortie ;
- dans lequel la zone de connexion (70) et la zone de stockage (21) sont définies sur des surfaces (20a, 20b) opposées séparées et superposées d'un premier panneau (20) articulé sur le plateau inférieur (12) ;
**caractérisé en ce que** la largeur du premier panneau (20) est sensiblement égale à la largeur de la zone de connexion (70), dans lequel la largeur de la zone de connexion (70) est sensiblement égale à la somme des largeurs de chaque adaptateur (72) et de chaque cadre de support de connecteurs (71).

2. Boîtier de terminaison optique (1) selon la revendication 1, dans lequel le corps de base (10) comprend en outre une seconde zone de connexion (50) comprenant des cadres de support de connecteurs (51) configurés pour loger d'autres adaptateurs (52) pour connecter lesdites fibres optiques préconnectorisées d'entrée à d'autres fibres optiques préconnectorisées épissées aux fibres optiques respectives dudit câble optique entrant dans le boîtier de terminaison optique (1) .

3. Boîtier de terminaison optique (1) selon la revendication 2, dans lequel la seconde zone de connexion (50) est définie sur un second panneau (40) articulé sur ledit plateau inférieur (12).

4. Boîtier de terminaison optique (1) selon l'une quelconque des revendications précédentes, dans lequel le premier panneau (20) peut tourner entre une première position de fonctionnement dans laquelle ledit premier panneau (20) est superposé sur le plateau inférieur (12) et une seconde position de fonctionnement dans laquelle le premier panneau (20) n'est pas superposé sur le plateau inférieur (12).

5. Boîtier de terminaison optique (1) selon la revendication 4, dans lequel le plateau inférieur (12) comprend un premier passage (13) configuré pour permettre l'entrée dudit câble optique dans le boîtier de terminaison optique, dans lequel lorsque le premier panneau (20) est dans ladite première position de fonctionnement, le premier panneau (20) est superposé sur ledit premier passage (13).

6. Boîtier de terminaison optique (1) selon la revendication 4 ou 5, dans lequel le plateau inférieur (12) comprend un second passage (14, 15) configuré pour permettre aux fibres optiques préconnectorisées de sortie de sortir du boîtier de terminaison optique (1), dans lequel lorsque le premier panneau (20) est dans ladite première position de fonctionnement, le premier panneau (20) est superposé sur ledit second passage (14, 15) .

7. Boîtier de terminaison optique (1) selon l'une quelconque des revendications 4 à 6, dans lequel ledit plateau inférieur (12) comprend une deuxième zone de stockage (19) pour placer des parties de longueur excédentaire des fibres optiques préconnectorisées de sortie.

8. Boîtier de terminaison optique (1) selon l'une quelconque des revendications 1 à 7, dans lequel la première zone de stockage (21) comprend une première zone de placement (22) pour placer lesdites parties de longueur excédentaire des fibres optiques préconnectorisées d'entrée et une seconde zone de placement (23) pour placer lesdites parties de longueur excédentaire des fibres optiques préconnectorisées de sortie, dans lequel la première zone de placement (22) est séparée de la seconde zone de placement (23).

9. Boîtier de terminaison optique (1) selon la revendication 4, lorsqu'elle dépend de la revendication 3, dans lequel le second panneau (40) peut tourner entre une première position dans laquelle le second panneau (40) est superposé sur le plateau inférieur (12) et une seconde position dans laquelle le second panneau (40) n'est pas superposé sur le plateau inférieur (12), dans lequel lorsque le second panneau (40) est dans sa première position de fonctionnement, la seconde zone de connexion (50) est située sur une surface arrière (40b) du second panneau (40).

10. Boîtier de terminaison optique (1) selon la revendication 9, dans lequel lorsque le premier panneau (20) et le second panneau (40) sont tous deux dans la première position, le second panneau (40) est superposé sur le premier panneau (20).

11. Boîtier de terminaison optique (1) selon la revendication 9 ou 10, dans lequel le premier panneau (20) est articulé sur une première partie latérale du plateau inférieur (12) et le second panneau (40) est articulé sur une seconde partie latérale du plateau inférieur (12) opposée à la première partie latérale, de sorte que lorsque le premier panneau (20) et le second panneau (40) sont tous deux dans la seconde position, le premier panneau (20) et le second panneau (40) s'étendent des côtés opposés du plateau inférieur (12) .

12. Boîtier de terminaison optique (1) selon l'une quelconque des revendications 1 à 11, dans lequel le corps de base (10) comprend en outre une pluralité de sièges (47a) pour loger des joints qui connectent les fibres optiques dudit câble optique entrant dans le boîtier de terminaison optique (1) aux autres fibres optiques préconnectorisées, dans lequel ladite pluralité de sièges (47a) sont agencés sur le second panneau (40).

13. Boîtier de terminaison optique (1) selon la revendication 12 lorsqu'elle dépend de la revendication 9, dans lequel ladite pluralité de sièges (47a) sont agencés sur une surface supérieure (40a) du second panneau (40) lorsque le second panneau (40) est dans sa première position de fonctionnement.

14. Boîtier de terminaison optique (1) selon la revendication 7, dans lequel le corps de base (10) comprend en outre une troisième zone de stockage (60) pour placer des parties de longueur excédentaire desdites fibres optiques préconnectorisées d'entrée, dans lequel ladite troisième zone de stockage (60) est définie sur le second panneau (40).

15. Boîtier de terminaison optique (1) selon la revendication 14, dans lequel la seconde zone de connexion (50) et la troisième zone de stockage (60) sont toutes deux définies sur une première surface (40b) du second panneau (40), et dans lequel le corps de base (10) comprend en outre une quatrième zone de stockage (42) pour placer des parties de fibres optiques du câble optique, dans lequel la quatrième zone de stockage (42) est définie sur une seconde surface (40a) du second panneau (40) opposée à ladite première surface (40b).
